# EUROPEAN PATENT APPLICATION

(11) **EP 4 715 608 A1**
(43) Date of publication of application: **25.03.2026**
(21) Application number: 26157998.1
(22) Date of filing: 18.10.2022
(51) Int. Cl.: G06F 12/02

(54) **MEMORY SYSTEM AND OPERATION THEREOF**

(62) Divisional of application: 24201377.9
(71) Applicant: Yangtze Memory Technologies Co., Ltd., Wuhan, Hubei 430000 (CN)
(72) Inventor: CHENG, Mo, Wuhan, Hubei, 430000 (CN)
(74) Representative: Gramm, Lins & Partner Patent- und Rechtsanwälte PartGmbB

(57) **Abstract**

In certain aspects, a memory system includes a memory system, coupled to a host memory, comprising a memory device, comprising first memory cells and second memory cells; a memory controller, coupled to a host and the memory device, configured to write a first data to the first memory cells and/or a second data to the second memory cells, wherein the first data comprises user data, and the second data comprises swap data from the host memory.

## Description

### BACKGROUND

The present disclosure relates to memory system and operation thereof.

The demands of storage capacity of host memory, e.g., dynamic random-access memory (DRAM), is growing, but the cost of host memory is still high. Using part of external memory, e.g., solid-state drive (SSD), to make up the short of the host memory is a feasible solution. Designing the external memory to fit the additional function is worth paying attention to.

### SUMMARY

In one aspect, a memory system, coupled to a host memory, comprising:
a memory device, comprising first memory cells and second memory cells;
a memory controller, coupled to a host and the memory device, configured to write a first data to the first memory cells and/or a second data to the second memory cells, wherein the first data comprises user data, and the second data comprises swap data from the host memory.

In some implementations, wherein the memory controller comprising:
a cache, configured to receive the first data and/or the second data;
a processor, configured to, in response to a command of writing, write the first data to the first memory cells according to a first address signal, and/or write the second data to the second memory cells according to a second address signal.

In some implementations, wherein the processor further configured to:
based on a logical to physical address mapping table, transfer a logical address of the first address signal and/or a second address signal to a physical address.

In some implementations, wherein the processor further configured to:
count cycle times of the second memory cells;
when the cycle times is greater than or equal to a lifetime threshold, the operation of writing the second data to the second memory cells is prohibited.

In some implementations, wherein the processor further configured to write the second data to the first memory cells.

In some implementations, wherein the memory cells of the second memory cells are single level cells (SLC) .

In some implementations, wherein the memory cells of the first memory cells are multi level cells (MLC) , trinary level cells (TLC) , or quad level cells (QLC) .

In another aspect, a method for operating a memory system, the memory system is coupled to a host memory, the method comprising:
receiving a first data and/or a second data, wherein the first data comprises user data, and the second data comprises swap data from the host memory;
writing the first data to first memory cells of a memory device and/or the second data to second memory cells of the memory device.

In some implementations, further comprising:
receiving a command of writing, a first address signal and/or a second address signal;
in response to the command of writing, writing the first data to the first memory cells according to the first address signal, and/or writing the second data to the second memory cells according to the second address signal.

In some implementations, further comprising:
based on a logical to physical address mapping table, transfer a logical address of the first address signal and/or the second address signal to a physical address.

In some implementations, further comprising:
counting cycle times of the second memory cells;
when the cycle times is greater than or equal to a lifetime threshold, the operation of writing the second data to the second memory cells is prohibited.

In some implementations, further comprising:
writing the second data to the first memory cells.

In another aspect, a memory system, coupled to a host memory, comprising:
a memory device, comprising first memory cells and second memory cells;
a memory controller, coupled to a host and the memory device, configured to read a first data from the first memory cells and/or a second data from the second memory cells, wherein the first data comprises user data, and the second data comprises swap data from the host memory.

In some implementations, wherein the memory controller comprising:
a processor, configured to, in response to a command of reading, read the first data from the first memory cells according to a first address signal, and/or read the second data from the second memory cells according to a second address signal.

In some implementations, wherein the processor further configured to:
based on a logical to physical address mapping table, transfer a logical address of the first address signal and/or the second address signal to a physical address.

In some implementations, wherein the processor further configured to:
count cycle times of the second memory cells;
when the cycle times is greater than or equal to a lifetime threshold, the operation of reading the second data from the second memory cells is prohibited.

In some implementations, wherein the memory cells of the second memory cells are single level cells (SLC) .

In some implementations, wherein the memory cells of the first memory cells are multi level cells (MLC) , trinary level cells (TLC) , or quad level cells (QLC) .

In another aspect, a method for operating a memory system, the memory system is coupled to a host memory, the method comprising:
receiving a command of reading, a first address signal and/or a second address signal;
reading the first data from first memory cells of a memory device and/or a second data from second memory cells of the memory device, wherein the first data comprises user data, and the second data comprises swap data from the host memory.

In some implementations, further comprising:
based on a logical to physical address mapping table, transfer a logical address of the first address signal and/or the second address signal to a physical address.

The method of claim 19, further comprising:
counting the cycle times of the second memory cells;
when the cycle times is greater than or equal to a lifetime threshold, the operation of reading the second data from the second memory cells is prohibited.

### BRIEF DESCRIPTION OF THE DRAWINGS

The accompanying drawings, which are incorporated herein and form a part of the specification, illustrate aspects of the present disclosure and, together with the description, further serve to explain the present disclosure and to enable a person skilled in the pertinent art to make and use the present disclosure.
FIG. 1 illustrates a block diagram of an exemplary system having a host and a memory system, according to some aspects of the present disclosure.
FIG. 2A illustrates a diagram of an exemplary memory card having a memory device, according to some aspects of the present disclosure.
FIG. 2B illustrates a diagram of an exemplary solid-state drive (SSD) having a memory device, according to some aspects of the present disclosure.
FIG. 3 illustrates a schematic diagram of an exemplary memory device including peripheral circuits, according to some aspects of the present disclosure.
FIG. 4 illustrates a block diagram of an exemplary memory system including a memory controller and a memory device, according to some aspects of the present disclosure.
FIG. 5 illustrates a block diagram of an exemplary host including a host memory and a host processor, according to some aspects of the present disclosure.
FIG. 6 illustrates a block diagram of an exemplary memory device including a memory cell array, according to some aspects of the present disclosure.
FIG. 7 illustrates a block diagram of an exemplary memory system including a memory controller and a memory device, according to some aspects of the present disclosure.
FIG. 8 illustrates a flowchart of an exemplary method for operating a memory system, according to some aspects of the present disclosure.
FIG. 9 illustrates a flowchart of an exemplary method for operating a memory system, according to some aspects of the present disclosure.

Aspects of the present disclosure will be described with reference to the accompanying drawings.

### DETAILED DESCRIPTION

Although specific configurations and arrangements are described, it should be understood that this is done for illustrative purposes only. As such, other configurations and arrangements can be used without departing from the scope of the present disclosure. Also, the present disclosure can also be employed in a variety of other applications. Functional and structural features as described in the present disclosure can be combined, adjusted, and modified with one another and in ways not specifically depicted in the drawings, such that these combinations, adjustments, and modifications are within the scope of the present disclosure.

In general, terminology may be understood at least in part from usage in context. For example, the term "one or more" as used herein, depending at least in part upon context, may be used to describe any feature, structure, or characteristic in a singular sense or may be used to describe combinations of features, structures or characteristics in a plural sense. Similarly, terms, such as "a," "an," or "the," again, may be understood to convey a singular usage or to convey a plural usage, depending at least in part upon context. In addition, the term "based on" may be understood as not necessarily intended to convey an exclusive set of factors and may, instead, allow for existence of additional factors not necessarily expressly described, again, depending at least in part on context.

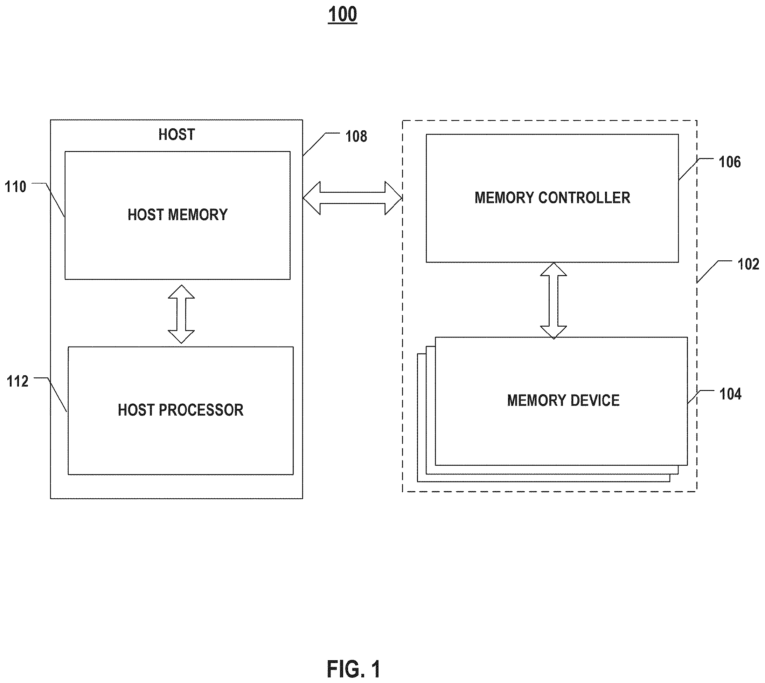

FIG. 1 illustrates a block diagram of an exemplary system 100 having a memory device, according to some aspects of the present disclosure. System 100 can be a mobile phone, a desktop computer, a laptop computer, a tablet, a vehicle computer, a gaming console, a printer, a positioning device, a wearable electronic device, a smart sensor, a virtual reality (VR) device, an argument reality (AR) device, or any other suitable electronic devices having storage therein. As shown in FIG. 1, system 100 can include a host 108 having a host memory 110 and a host processor 112, and a memory system 102 having one or more memory devices 104 and a memory controller 106.

Host 108 can be a processor of an electronic device, such as a central processing unit (CPU), or a system-on-chip (SoC), such as an application processor (AP). Host 108 can be coupled to memory controller 106 and configured to send or receive data to or from memory devices 104 through memory controller 106. For example, host 108 may send the program data in a program operation or receive the read data in a read operation. Host processor 112 can be a control unit (CU), or an arithmetic & logic unit (ALU). Host memory 110 can be memory units including register or cache memory. Host 108 is configured to receive and transmit instructions and commands to and from memory controller 106 of memory device 102, and execute or perform multiple functions and operations provided in the present disclosure, which will be described later.

Memory device 104 can be any memory device disclosed in the present disclosure, such as a NAND Flash memory device, which includes a page buffer having multiple portions, for example, four quarters. It is noted that the NAND Flash is only one example of the memory device for illustrative purposes. It can include any suitable solid-state, non-volatile memory, e.g., NOR Flash, Ferroelectric RAM (FeRAM), Phase-change memory (PCM), Magnetoresistive random-access memory (MRAM), Spin-transfer torque magnetic random-access memory (STT-RAM), or Resistive random-access memory (RRAM), etc. In some implementations, memory device 104 includes a three-dimensional (3D) NAND Flash memory device.

Memory controller 106 can be implemented by microprocessors, microcontrollers (a.k.a. microcontroller units (MCUs)), digital signal processors (DSPs), application-specific integrated circuits (ASICs), field-programmable gate arrays (FPGAs), programmable logic devices (PLDs), state machines, gated logic, discrete hardware circuits, and other suitable hardware, firmware, and/or software configured to perform the various functions described below in detail.

Memory controller 106 is coupled to memory device 104 and host 108 and is configured to control memory device 104, according to some implementations. Memory controller 106 can manage the data stored in memory device 104 and communicate with host 108. In some implementations, memory controller 106 is designed for operating in a low duty-cycle environment like secure digital (SD) cards, compact Flash (CF) cards, universal serial bus (USB) Flash drives, or other media for use in electronic devices, such as personal computers, digital cameras, mobile phones, etc. In some implementations, memory controller 106 is designed for operating in a high duty-cycle environment SSDs or embedded multi-media-cards (eMMCs) used as data storage for mobile devices, such as smartphones, tablets, laptop computers, etc., and enterprise storage arrays. Memory controller 106 can be configured to control operations of memory device 104, such as read, erase, and program operations, by providing instructions, such as read instructions, to memory device 104. For example, memory controller 106 may be configured to provide a read instruction to the peripheral circuit of memory device 104 to control the read operation. Memory controller 106 can also be configured to manage various functions with respect to the data stored or to be stored in memory device 104 including, but not limited to bad-block management, garbage collection, logical-to-physical address conversion, wear leveling, etc. In some implementations, memory controller 106 is further configured to process error correction codes (ECCs) with respect to the data read from or written to memory device 104. Any other suitable functions may be performed by memory controller 106 as well, for example, formatting memory device 104.

Memory controller 106 can communicate with an external device (e.g., host 108) according to a particular communication protocol. For example, memory controller 106 may communicate with the external device through at least one of various interface protocols, such as a USB protocol, an MMC protocol, a peripheral component interconnection (PCI) protocol, a PCI-express (PCI-E) protocol, an advanced technology attachment (ATA) protocol, a serial-ATA protocol, a parallel-ATA protocol, a small computer small interface (SCSI) protocol, an enhanced small disk interface (ESDI) protocol, an integrated drive electronics (IDE) protocol, a Firewire protocol, etc.

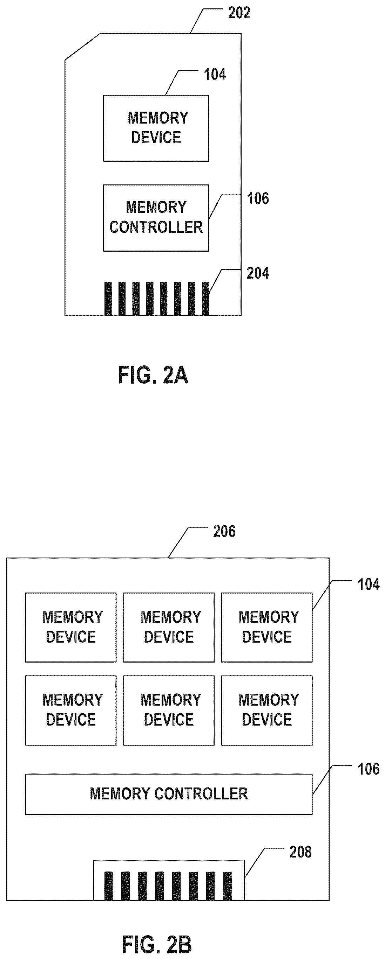

Memory controller 106 and one or more memory devices 104 can be integrated into various types of storage devices, for example, being included in the same package, such as a universal Flash storage (UFS) package or an eMMC package. That is, memory system 102 can be implemented and packaged into different types of end electronic products. In one example as shown in FIG. 2A, memory controller 106 and a single memory device 104 may be integrated into a memory card 202. Memory card 202 can include a PC card (PCMCIA, personal computer memory card international association), a CF card, a smart media (SM) card, a memory stick, a multimedia card (MMC, RS-MMC, MMCmicro), an SD card (SD, miniSD, microSD, SDHC), a UFS, etc. Memory card 202 can further include a memory card connector 204 coupling memory card 202 with a host (e.g., host 108 in FIG. 1). In another example as shown in FIG. 2B, memory controller 106 and multiple memory devices 104 may be integrated into an SSD 206. SSD 206 can further include an SSD connector 208 coupling SSD 206 with a host (e.g., host 108 in FIG. 1). In some implementations, the storage capacity and/or the operation speed of SSD 206 is greater than those of memory card 202.

Memory control 106 is configured to receive and transmit commands to and from host 108, and execute or perform multiple functions and operations provided in the present disclosure, which will be described later.

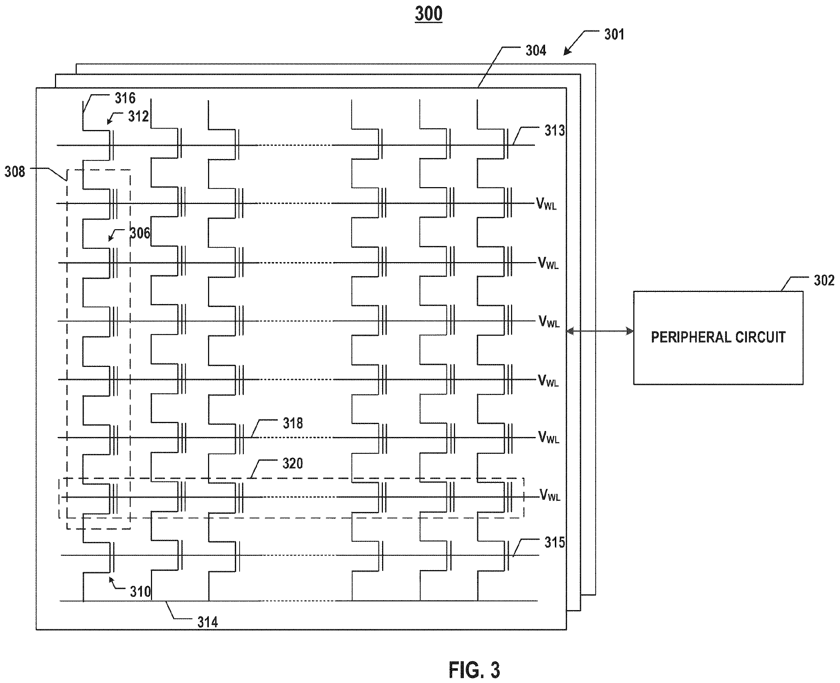

FIG. 3 illustrates a schematic circuit diagram of an exemplary memory device 300 including peripheral circuits, according to some aspects of the present disclosure. Memory device 300 can be an example of memory device 104 in FIG. 1. It is noted that the NAND Flash disclosed herein is only one example of the memory device for illustrative purposes. It can include any suitable solid-state, non-volatile memory, e.g., NOR Flash, FeRAM, PCM, MRAM, STT-RAM, or RRAM, etc. Memory device 300 can include a memory cell array 301 and peripheral circuits 302 coupled to memory cell array 301. Memory cell array 301 can be a NAND Flash memory cell array in which memory cells 306 are provided in the form of an array of NAND memory strings 308 each extending vertically above a substrate (not shown). In some implementations, each NAND memory string 308 includes a plurality of memory cells 306 coupled in series and stacked vertically. Each memory cell 306 can hold a continuous, analog value, such as an electrical voltage or charge, which depends on the number of electrons trapped within a region of memory cell 306. Each memory cell 306 can be either a floating gate type of memory cell including a floating-gate transistor or a charge trap type of memory cell including a charge-trap transistor.

In some implementations, each memory cell 306 is a single-level cell (SLC) that has two possible memory states and thus, can store one bit of data. For example, the first memory state "0" can correspond to a first range of voltages, and the second memory state "1" can correspond to a second range of voltages. In some implementations, each memory cell 306 is a multi-level cell (MLC) that is capable of storing more than a single bit of data in more than four memory states. For example, the MLC can store two bits per cell, three bits per cell (also known as triple-level cell (TLC)), or four bits per cell (also known as a quad-level cell (QLC)). Each MLC can be programmed to assume a range of possible nominal storage values. In one example, if each MLC stores two bits of data, then the MLC can be programmed to assume one of three possible programming levels from an erased state by writing one of three possible nominal storage values to the cell. A fourth nominal storage value can be used for the erased state.

As shown in FIG. 3, each NAND memory string 308 can include a source select gate (SSG) transistor 310 at its source end and a drain select gate (DSG) transistor 312 at its drain end. SSG transistor 310 and DSG transistor 312 can be configured to activate selected NAND memory strings 308 (columns of the array) during read and program operations. In some implementations, the sources of NAND memory strings 308 in the same block 304 are coupled through a same source line (SL) 314, e.g., a common SL. In other words, all NAND memory strings 308 in the same block 304 have an array common source (ACS), according to some implementations. The drain of DSG transistor 312 of each NAND memory string 308 is coupled to a respective bit line 316 from which data can be read or written via an output bus (not shown), according to some implementations. In some implementations, each NAND memory string 308 is configured to be selected or deselected by applying a select voltage (e.g., above the threshold voltage of DSG transistor 312) or a deselect voltage (e.g., 0 V) to the gate of respective DSG transistor 312 through one or more DSG lines 313 and/or by applying a select voltage (e.g., above the threshold voltage of SSG transistor 310) or a deselect voltage (e.g., 0 V) to the gate of respective SSG transistor 310 through one or more SSG lines 315.

As shown in FIG. 3, NAND memory strings 308 can be organized into multiple blocks 304, each of which can have a common source line 314, e.g., coupled to the ACS. In some implementations, each block 304 is the basic data unit for erase operations, i.e., all memory cells 306 on the same block 304 are erased at the same time. To erase memory cells 306 in a selected block 304, source lines 314 coupled to selected block 304 as well as unselected blocks 304 in the same plane as selected block 304 can be biased with an erase voltage (Vers), such as a high positive voltage (e.g., 20 V or more). Memory cells 306 of adjacent NAND memory strings 308 can be coupled through word lines 318 that select which row of memory cells 306 is affected by the read and program operations. In some implementations, each word line 318 is coupled to a page 320 of memory cells 306, which is the basic data unit for the program and read operations. The size of one page 320 in bits can relate to the number of NAND memory strings 308 coupled by word line 318 in one block 304. Each word line 318 can include a plurality of control gates (gate electrodes) at each memory cell 306 in respective page 320 and a gate line coupling the control gates. Peripheral circuits 302 can be coupled to memory cell array 301 through bit lines 316, word lines 318, source lines 314, SSG lines 315, and DSG lines 313. Peripheral circuits 302 can include any suitable analog, digital, and mixed-signal circuits for facilitating the operations of memory cell array 301 by applying and sensing voltage signals and/or current signals to and from each target memory cell 306 through bit lines 316, word lines 318, source lines 314, SSG lines 315, and DSG lines 313. Peripheral circuits 302 can include various types of peripheral circuits formed using metal-oxide-semiconductor (MOS) technologies.

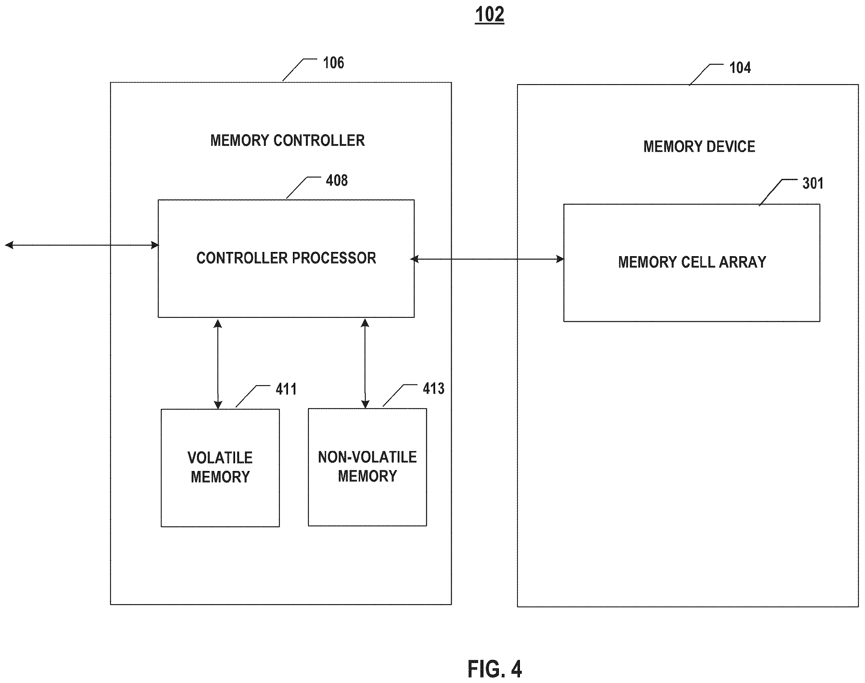

FIG. 4 illustrates a block diagram of an exemplary memory system 102 including a memory controller 106 and a memory device 104, according to some aspects of the present disclosure. As shown in FIG. 4, memory controller 106 can include a controller processor 408, such as a memory chip controller (MCC) or a memory controller unit (MCU). Controller processor 408 is configured to control modules to execute commands or instructions to perform functions disclosed in the present disclosure. Controller processor 408 can also be configured to control the operations of each peripheral circuit by generating and sending various control signals, such as read commands for read operations. Controller processor 408 can also send clock signals at desired frequencies, periods, and duty cycles to other peripheral circuits 302 to orchestrate the operations of each peripheral circuit 302, for example, for synchronization. Memory controller 106 can further include a volatile controller memory 411 and a non-volatile controller memory. Volatile controller memory 411 can include a register or cache memory such that it allows a faster access and process speed to read, write, or erase the data stored therein, while it may not retain stored information after power is removed. In some implementations, volatile controller memory 411 includes dynamic random access memory (DRAM), Static random access memory (SRAM). Non-volatile controller memory 413 can retain the stored information even after power is removed. In some implementations, non-volatile controller memory 413 includes NAND, NOR, FeRAM, PCM, MRAM, STT-RAM, or RRAM. Memory device 104 can include a memory cell array such as memory cell array 301 in FIG. 3. In some implementations, non-volatile controller memory 413 can be not provided in the memory controller 106, for example, non-volatile controller memory 413 is deposed outside of the memory controller 106 but is coupled to the memory controller 106. In some implementations, the controller memory (e.g., 411 or 413) is configured to store the L2P address mapping table (e.g., 4271, 4273) corresponding to the file (e.g., 129).

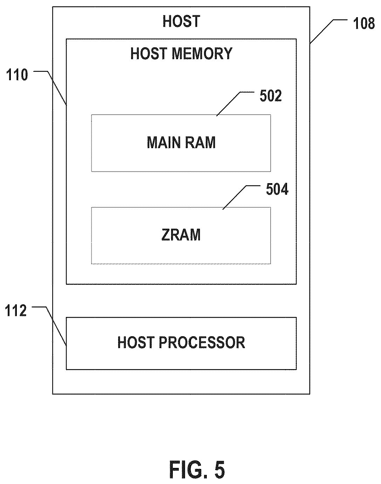

FIG. 5 illustrates a block diagram of an exemplary host 108 including a host memory 110 and a host processor 112, according to some aspects of the present disclosure. The host memory 110 can be a volatile memory, such as random access memory (RAM), e.g., DRAM, SRAM. The host memory 110 also can be a non-volatile memory, such as NAND, NOR, FeRAM, PCM, MRAM, STT-RAM, or RRAM. The host memory 110 includes a main RAM 502 and a ZRAM 504. In some implementations, the main RAM 502 and the ZRAM 504 can be different logic zones of the host memory 110. In other words, the memory cells of the main RAM 502 and the memory cells of the ZRAM 504 can be distinguished by logical addresses of the memory cells. In some implementations, the main RAM 502 and the ZRAM 504 can be separated memories. For example, the main RAM 502 can belong to a first host memory 110, the ZRAM 504 can be belong to a second host memory 110 which is independent to the first host memory 110. And the first host memory 110 and the second host memory 110 can be same or different types of memory. In some implementations, the host processor 112 can be a control unit (CU), or an arithmetic & logic unit (ALU).

In some implementations, the data of the main RAM 502 can be transferred to the ZRAM 504, and the transferred data can be software program. Further, the operation of data transfer can be triggered when the main RAM 502 is full, or anytime the host processor 112 depends. In some implementations, the operation of data transfer can be controlled by the host processor 112. In some implementations, the transferred data to the ZRAM 504 can be compressed data. The operation of data compression can be conducted in anytime, for example, before the data sent out from the main RAM 502, or during the process of transfer (after the data sent out from the main RAM 502 and before the data received by the ZRAM 504), or after the data received by the ZRAM 504. The compression operation can be controlled by host processor 112. In some implementations, the process of the operation can be, when the main RAM 502 is full, the host processor 112 controls the main RAM 502 transfer the data of main RAM 502 to the ZRAM 504, and the transferred data is compressed before it received by the ZRAM 504. In some implementations, the data transferred from main RAM 502 can be the data with lower access frequency than the data remained in the main RAM 502. In this case, the inactive data can be compressed and the storage capacity of the host memory 110 can be saved. For example, in an implementation of smart phone, presuming 5 applications are running and the programs of the 5 applications are stored in the main RAM 502, if 2 of the 5 applications are inactive, the programs of the 2 inactive applications can be compressed and stored in the ZRAM 504. So that, part of the storage capacity of the main RAM 502 can be released so that more programs can be stored in the host memory 110 which means more apps can run at the same time. In this case, the 2 inactive applications are still run in the background, and the programs of the 2 inactive applications can be decompressed when the 2 inactive applications are called.

The data in the host memory 110 also can be transferred to the memory device 104, and the data can be transferred from the ZRAM 504 or the main RAM 502. Further, the operation of data transfer can be triggered when the main RAM 502 or the main RAM 502 is full, or anytime the host processor 112 depends. In some implementations, the operation of data transfer can be controlled by the host processor 112. In some implementations, the ZRAM 504 transfers swap data to the memory system (e.g., SSD, UFS, eMMC), the swap data can be the compressed software program. The memory system can store the swap data, memory system can also send the swap data back to the host memory 110 (e.g., the ZRAM 504), so that the memory system can be a supplementary of the host memory 110. In some implementations, after the ZRAM 504 transfers the swap data to the memory system, the swap data in the ZRAM 504 can be deleted for releasing the storage capacity of the ZRAM 504. In some implementations, when the storage capacity of the ZRAM 504 is tight, the swap data corresponding to the inactive software or application can be transferred to the memory system from the ZRAM 504; when the inactive software or application is called, the corresponding swap data can be transferred to the ZRAM 504 from the memory system. In this case, more software or applications can be running at the same time.

The host processor 112 can send a command to the memory system to instruct the memory system to input or output the swap data. Further, the memory system can comprise the memory controller 106 and the memory device 104, the memory device 104 can be the NAND flash memory. The command and the swap data can be sent to memory controller 106, and the memory controller 106 can write the swap data to the memory device 104 according to the command. In some implementations, the host processor 112 also can send address signal to the memory controller, wherein the address signal comprises a logical address, and the controller can transfer the logical address to a physical address based on a L2P address mapping table. The L2P address mapping table can be stored in a DRAM of the memory system, the NAND flash, or the host memory 110. The physical address points to the memory cells of memory device 104, so that the memory controller 106 can write the swap data to the target memory cells, and the memory controller 106 can read the swap data from the target memory cells. In some implementations, when the storage capacity of the ZRAM 504 is tight, the swap data corresponding to the inactive software or application can be transferred to the memory device 104 from the ZRAM 504; when the inactive software or application is called, the corresponding swap data can be transferred to the ZRAM 504 from the memory device 104. In this case, more software or applications can be running at the same time.

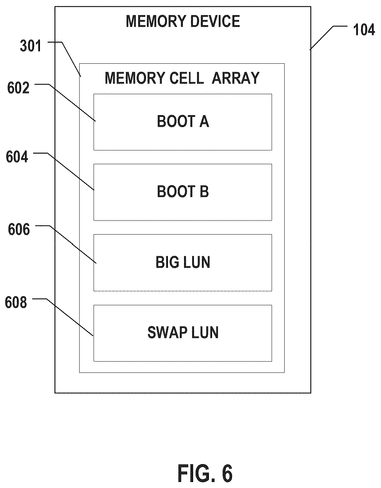

FIG. 6 illustrates a block diagram of an exemplary memory device 104 including a memory cell array 301, according to some aspects of the present disclosure. The memory cell array 301 can be divided into multiple logical units according to the logical address of the memory cells, e.g., big LUN 606 (logic unit number), swap LUN 608, BOOT A 602, BOOT B 604. In some implementations, host 108 can access the big LUN 606, swap LUN 608, BOOT A 602 or BOOT B 604 by sending the command and the address signal of the memory cells. Further, the address signal including the logical address of the memory cells, and the memory controller 106 transfers the logical address to the physical address according to the L2P mapping table.

In some implementations, big LUN 606, BOOT A 602 and BOOT B 604 can store user data, and the swap LUN 608 can store swap data. The user data can be the data received by host 108 or the data generated in the host 108. For example, in a smart phone with a UFS (the memory system), the user data can be the data input by user of the computer, or the data generated during the operation of host 108. In some implementations, BOOT A 602 and BOOT B 604 also can store system data, wherein the system data can be the system programs of an operation system. For example, in a smart phone with a UFS (the memory system), the system data stored in the BOOT A 602 or BOOT B 604 of the SSD can be the programs of Windows system. The memory controller 106 can write the user data to the memory cells corresponding to the big LUN 606, BOOT A 602 and BOOT B 604, and the memory controller 106 can read the user data from the memory cells corresponding to the big LUN 606, BOOT A 602 and BOOT B 604. Memory controller 106 can write the swap data to the memory cells corresponding to the swap LUN 608, and the memory controller 106 can read the swap data from the memory cells corresponding to the swap LUN 608. In other words, the memory cells for storing the swap data are separated from the memory cells for storing the user data. Because the swap data is accessed more frequently than the user data, the memory cells corresponding to the swap LUN 608 are worn out earlier than the memory cells corresponding to the big LUN 606, BOOT A 602 or BOOT B 604. Because the swap LUN 608 is separated from the big LUN 606, BOOT A 602 or BOOT B 604, the big LUN 606, BOOT A 602 and BOOT B 604 are not influenced by the frequent accesses of the swap LUN 608. If the memory cells corresponding to the swap LUN 608 is worn out, the memory cells corresponding to the big LUN 606, BOOT A 602 and BOOT B 604 are still programmable and readable.

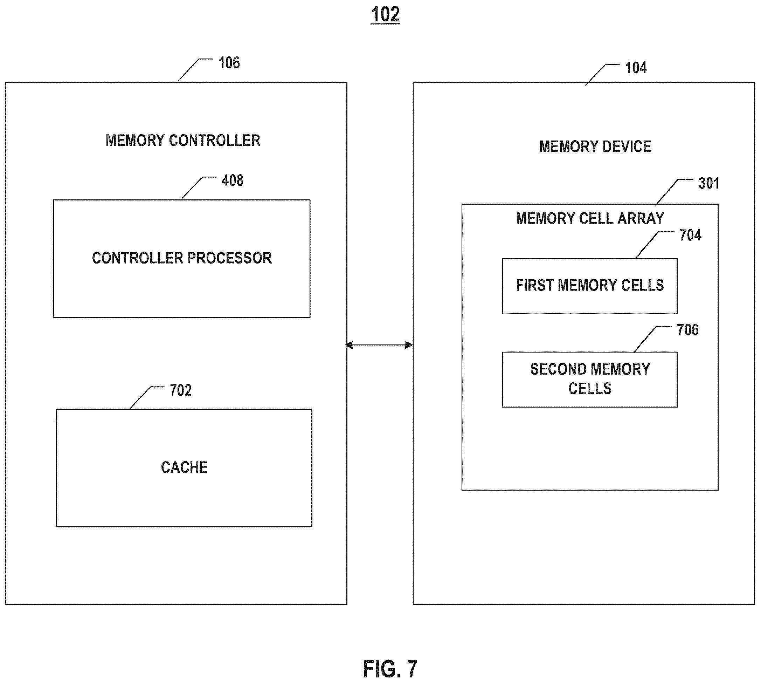

FIG. 7 illustrates a block diagram of an exemplary memory system including a memory controller 106 and a memory device 104, according to some aspects of the present disclosure. In some implementations, memory device 104 can comprise first memory cells 704 and second memory cells 706. The first memory cells 704 are configured to store a first data, wherein the first data is user data. The second memory cells 706 are configured to store a second data, wherein the second data is swap data from a host memory 110. Further, a memory controller 106 is coupled between a host 108 and the memory device 104, and the memory controller 106 is configured to write a first data to the first memory cells 704 and/or a second data to the second memory cells 706. In some implementations, the first memory cells 704 can be the memory cells corresponding to big LUN 606, BOOT A 602 and BOOT B 604, and the second memory cells 706 can be the memory cells corresponding to swap LUN 608. Because the swap data is accessed more frequently than the user data, second memory cells 706 are wear out earlier than the first memory cells 704. Because second memory cells 706 is separated from the first memory cells 704, first memory cells 704 are not influenced by the frequent accesses of second memory cells 706. If the second memory cells 706 are wear out, second memory cells 706 are still programmable and readable.

In some implementations, the second memory cells 706 can be single level cells (SLC). Due to each memory cell stores one bit data, SLC can have better performance than multi level cells (MLC), trinary level cells (TLC), and quad level cells (QLC), e.g., less program time, less reading time, and more program/erase cycle times. Because the swap LUN 608 is accessed more frequently than the big LUN 606, BOOT A 602 and BOOT B 604, the second memory cells 706 demands better performance than the first memory cells 704. And the SLC can satisfy the performance demands of the second memory cells 706.

In some implementations, the first memory cells 704 can be MLC, TLC or QLC. Due to each memory cell stores 2/3/4 bits data, MLC, TLC and QLC can have larger storage capacity than SLC. Because the big LUN 606, BOOT A 602 and BOOT B 604 is accessed less frequently than the swap LUN 608 and demand for larger storage capacity, the first memory cells 704 demand for lower cost than the second memory cells 704. And the MLC, TLC and QLC can satisfy the low-cost demands of the first memory cells 704.

In some implementations, the memory controller 106 comprises a cache 702 and a controller processor 408. The cache 702 can be SRAM, DRAM, NAND flash, NOR flash or any other types of memory or electrical device. The controller processor 408 can be a control unit (CU), or an arithmetic & logic unit (ALU). For a writing operation, based on a command of writing, the cache 702 is configured to receive the first data and/or the second data, and controller processor 408 is configured to write the first data to the first memory cells 704 according to a first address signal, and/or write the second data to the second memory cells 706 according to a second address signal. In some implementations, the first address signal can comprise a first logical address points to the big LUN 606, BOOT A 602 and BOOT B 604. The controller processor 408 can transfer the first logical address to a first physical address based on an L2P address mapping table, and the first physical address corresponds to the first memory cells 704. Thus, memory controller 106 writes user data to the first memory cells 704 according to the first address signal. In some implementations, the second address signal can comprise a second logical address points to the swap LUN 608. The controller processor 408 can transfer the second logical address to a second physical address based on a L2P address mapping table, and the second physical address corresponds to the second memory cells 706. Thus, memory controller 106 writes swap data to the second memory cells 706 according to the second address signal. For a reading operation, based on a command of reading, the cache 702 is configured to receive the first data and/or the second data, and controller processor 408 is configured to read the first data from the first memory cells 704 according to a second address signal, and/or read the second data from the second memory cells 706 according to a second address signal. In some implementations, the second address signal can comprise a first logical address points to the big LUN 606, BOOT A 602 and BOOT B 604. The controller processor 408 can transfer the first logical address to a first physical address based on an L2P address mapping table, and the first physical address corresponds to the first memory cells 704. Thus, memory controller 106 reads user data from the first memory cells 704 according to the second address signal. In some implementations, the second address signal can comprise a second logical address points to the swap LUN 608. The controller processor 408 can transfer the second logical address to a second physical address based on a L2P address mapping table, and the second physical address corresponds to the second memory cells 706. Thus, memory controller 106 reads swap data from the second memory cells 706 according to the second address signal.

In some implementations, for a writing operation, the memory processor can count the cycle times of the second memory cells 706, and compare the cycle times with a lifetime threshold, when the writing time reaches the lifetime threshold, the processor can prohibit to write the second data to the second memory cells 706. The cycle times can be the program/erase times. The swap LUN 608 is accessed more frequently than the big LUN 606, BOOT A 602 and BOOT B 604, so that the second memory cells 706 may be worn out earlier than the first memory cells 704. Counting cycle times of the SLC can monitor the rest of the life of the second memory cells 706. When the second memory cells 706 are wear out, the second memory cells 706 will be disabled in case of swap data loss. In some implementations, after the second memory cells 706 are disabled, the host 108 will not transfer swap data to the memory system. In other implementations, after the second memory cells 706 are disabled, the host 108 will still transfer swap data to the memory system, and the memory controller 106 will write the swap data to the first memory cells 704 according to the command provided by the host 108. In some implementations, for a reading operation, the memory processor can count the cycle times of the second memory cells 706, and compare the cycle times with a lifetime threshold, when the reading time reaches the lifetime threshold, the processor can prohibit to read the second data from the second memory cells 706. The cycle times can be the program/erase times. The swap LUN 608 is accessed more frequently than the big LUN 606, BOOT A 602 and BOOT B 604, so that the second memory cells 706 may be worn out earlier than the first memory cells 704. Counting cycle times of the SLC can monitor the rest of the life of the second memory cells 706. When the second memory cells 706 are wear out, the second memory cells 706 will be disabled in case of swap data loss. In some implementations, after the second memory cells 706 are disabled, the host 108 will not transfer swap data to the memory system. In other implementations, after the second memory cells 706 are disabled, the host 108 will still transfer swap data to the memory system, and the memory controller 106 will read the swap data from the first memory cells 704 according to the command provided by the host 108.

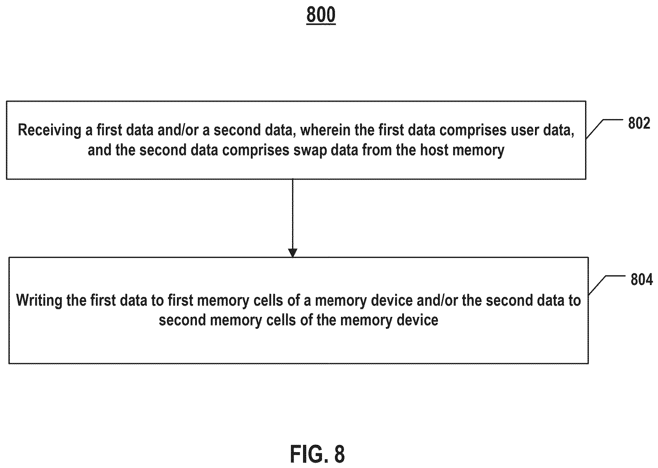

FIG. 8 illustrates a flowchart of an exemplary method for operating a memory system, according to some aspects of the present disclosure. The memory system may be any suitable memory system disclosed herein, e.g., memory system 102 in FIGs. 4 and 7. Method 800 may be implemented partially or fully by memory system 102 as in FIGs. 4 and 7. It is understood that the operations shown in method may not be exhaustive and that other operations can be performed as well before, after, or between any of the illustrated operations. Further, some of the operations may be performed simultaneously, or in a different order than shown in FIG. 8.

Referring to FIG. 8, method 800 starts at operation 802 in which a memory system (e.g., memory system 102 as in FIGs. 4 and 7) receives a first data and/or a second data from a host (e.g., host 108 in FIGs. 1 and 5). In some implementations, the first data is user data, and the second data is swap data from a host memory.

In some implementations, the memory system can comprise the memory controller and the memory device, the memory device can be the NAND flash memory. The memory device can comprise first memory cells and second memory cells.

In operation 804, as illustrated in FIG. 8, writing the first data to the first memory cells of a memory device and/or a second data to the second memory cells of the memory device.

In some implementations, the memory controller is coupled between a host and the memory device, and the memory controller is configured to write a first data to the first memory cells and/or a second data to the second memory cells. In some implementations, the first memory cells can be the memory cells corresponding to big LUN, BOOT A and BOOT B, and the second memory cells can be the memory cells corresponding to swap LUN.

In some implementations, a command and the swap data can be sent to the memory controller, and the memory controller can write the swap data to the memory device according to the command of writing. In some implementations, the host processor also can send address signal to the memory controller, wherein the address signal can comprise a logical address, and the controller can transfer the logical address to a physical address based on a L2P address mapping table. The L2P address mapping table can be stored in a DRAM of the memory system, the NAND flash, or the host memory. The physical address points to the memory cells of the memory device, so that the memory controller can write the swap data to the target memory cells, and the memory controller can read the swap data from the target memory cells. In some implementations, when the storage capacity of the ZRAM is tight, the swap data corresponding to the inactive software or application can be transferred to the memory device from the ZRAM; when the inactive software or application is called, the corresponding swap data can be transferred to the ZRAM from the memory device. In this case, more software or applications can be running at the same time.

In some implementations, the memory controller comprises a cache and a controller processor. The cache can be SRAM, DRAM, NAND flash, NOR flash or any other types of memory or electrical device. The controller processor can be a control unit (CU), or an arithmetic & logic unit (ALU). The cache is configured to receive the first data and/or the second data, and controller processor is configured to write the first data to the first memory cells according to a first address signal, and/or write the second data to the second memory cells according to a address signal. In some implementations, the address signal can comprise a first logical address points to the big LUN, BOOT A and BOOT B. The controller processor can transfer the first logical address to a first physical address based on a L2P address mapping table, and the first physical address corresponds to the first memory cells. Thus, the memory controller writes user data to the first memory cells according to the address signal. In some implementations, the address signal can comprise a second logical address pointing to the swap LUN. The controller processor can transfer the second logical address to a second physical address based on an L2P address mapping table, and the second physical address corresponds to the second memory cells. Thus, the memory controller writes swap data to the second memory cells according to the address signal.

In some implementations, the memory processor can count the cycle times of the second memory cells, and compare the cycle times with a lifetime threshold, when the writing time reaches the lifetime threshold, the processor can prohibit to write the second data to the second memory cells. The cycle times can be the program/erase times. The swap LUN is accessed more frequently than the big LUN, BOOT A and BOOT B, so that the second memory cells may be worn out earlier than the first memory cells. Counting cycle times of the SLC can monitor the rest of the life of the second memory cells. When the second memory cells are worn out, the second memory cells will be disabled in case of swap data loss. In some implementations, after the second memory cells are disabled, the host will not transfer swap data to the memory system. In other implementations, after the second memory cells are disabled, the host will still transfer swap data to the memory system, and the memory controller will write the swap data to the first memory cells according to the command provided by the host.

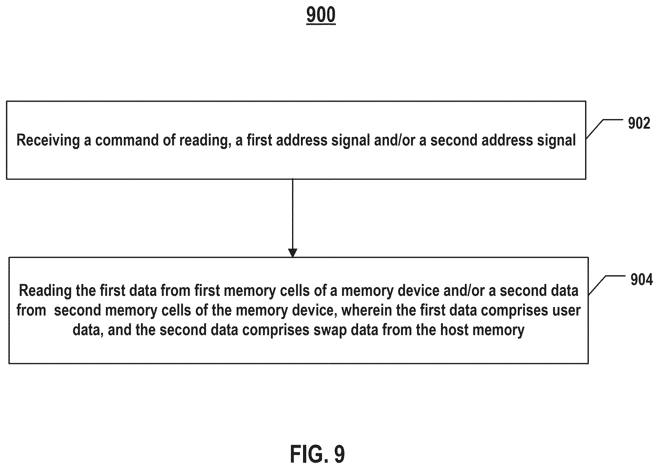

FIG. 9 illustrates a flowchart of an exemplary method for operating a memory system, according to some aspects of the present disclosure. The memory system may be any suitable memory system disclosed herein, e.g., memory system 102 in FIGs. 4 and 7. Method 800 may be implemented partially or fully by memory system 102 as in FIGs. 4 and 7. It is understood that the operations shown in method may not be exhaustive and that other operations can be performed as well before, after, or between any of the illustrated operations. Further, some of the operations may be performed simultaneously, or in a different order than shown in FIG. 8.

Referring to FIG. 9, method 900 starts at operation 902 in which a memory system (e.g., memory system 102 as in FIGs. 4 and 7) receives a command of reading, a first address signal and/or a second address signal from a host (e.g., host 108 in FIGs. 1 and 5).

In some implementations, the memory system can comprise the memory controller and the memory device, the memory device can be the NAND flash memory. The memory device can comprise first memory cells and second memory cells.

In the operation 904, as illustrated in FIG. 9, reading the first data from first memory cells of a memory device and/or a second data from second memory cells of the memory device, wherein the first data is user data, and the second data is swap data from a host memory.

In some implementations, the memory controller is coupled between a host and the memory device, and the memory controller is configured to read a first data from the first memory cells and/or a second data from the second memory cells. In some implementations, the first memory cells can be the memory cells corresponding to big LUN, BOOT A and BOOT B, and the second memory cells can be the memory cells corresponding to swap LUN.

In some implementations, a command and the swap data can be sent to the memory controller, and the memory controller can read the swap data from the memory device according to the command of reading. In some implementations, the host processor also can send address signal to the memory controller, wherein the address signal can comprise a logical address, and the controller can transfer the logical address to a physical address based on a L2P address mapping table. The L2P address mapping table can be stored in a DRAM of the memory system, the NAND flash, or the host memory. The physical address points to the memory cells of the memory device, so that the memory controller can read the swap data from the target memory cells, and the memory controller can read the swap data from the target memory cells. In some implementations, when the storage capacity of the ZRAM is tight, the swap data corresponding to the inactive software or application can be transferred to the memory device from the ZRAM; when the inactive software or application is called, the corresponding swap data can be transferred to the ZRAM from the memory device. In this case, more software or applications can be running at the same time.

In some implementations, the memory controller comprises a cache and a controller processor. The cache can be SRAM, DRAM, NAND flash, NOR flash or any other types of memory or electrical device. The controller processor can be a control unit (CU), or an arithmetic & logic unit (ALU). The cache is configured to receive the first data and/or the second data, and controller processor is configured to read the first data from the first memory cells according to a first address signal, and/or read the second data from the second memory cells according to a address signal. In some implementations, the address signal can comprise a first logical address points to the big LUN, BOOT A and BOOT B. The controller processor can transfer the first logical address to a first physical address based on a L2P address mapping table, and the first physical address corresponds to the first memory cells. Thus, the memory controller reads user data from the first memory cells according to the address signal. In some implementations, the address signal can comprise a second logical address pointing to the swap LUN. The controller processor can transfer the second logical address to a second physical address based on an L2P address mapping table, and the second physical address corresponds to the second memory cells. Thus, the memory controller reads swap data from the second memory cells according to the address signal.

In some implementations, the memory processor can count the cycle times of the second memory cells, and compare the cycle times with a lifetime threshold, when the reading time reaches the lifetime threshold, the processor can prohibit to read the second data from the second memory cells. The cycle times can be the program/erase times. The swap LUN is accessed more frequently than the big LUN, BOOT A and BOOT B, so that the second memory cells may be worn out earlier than the first memory cells. Counting cycle times of the SLC can monitor the rest of the life of the second memory cells. When the second memory cells are worn out, the second memory cells will be disabled in case of swap data loss. In some implementations, after the second memory cells are disabled, the host will not transfer swap data to the memory system. In other implementations, after the second memory cells are disabled, the host will still transfer swap data to the memory system, and the memory controller will read the swap data from the first memory cells according to the command provided by the host.

The foregoing description of the specific implementations can be readily modified and/or adapted for various applications. Therefore, such adaptations and modifications are intended to be within the meaning and range of equivalents of the disclosed implementations, based on the teaching and guidance presented herein.

The breadth and scope of the present disclosure should not be limited by any of the above-described exemplary implementations, but should be defined only in accordance with the following claims and their equivalents.

## Claims

1. A memory system (102) coupled to a host (108), comprising:
a memory device (104, 300) comprising NAND flash memory cell array and peripheral circuits coupled to the NAND flash memory cell array, wherein a memory cell of the NAND flash memory cell array is configured to store one or more bits of data; and
a memory controller (106) coupled to the host (108) and the memory device (104, 300), the memory controller (106) being configured to:
write user data comprising application generated data or data input by a user via the host (108) to first memory cells (704) of the NAND flash memory cell array;
write swap data to second memory cells (706) of the NAND flash memory cell array, wherein the swap data are from a random access memory (RAM) of the host (108), and each of the second memory cells (706) is configured to store one bit of data; and
read the swap data from the second memory cells (706) and send the swap data to the host.

2. The memory system (102) of claim 1, wherein the RAM comprises ZRAM (504) and the swap data comprises compressed data from the ZRAM (504).

3. The memory system (102) of claim 1, wherein the memory controller is further configured to:
in response to cycle times of the second memory cells being greater than or equal to a threshold, prohibit the second memory cells.

4. The memory system (102) of claim 3, wherein:
the cycle times of the second memory cells comprise program/erase cycle times;
the threshold comprises a lifetime threshold; and
the second memory cells are worn out based on the cycle times of the second memory cells being greater than or equal to the lifetime threshold.

5. The memory system (102) of claim 3, wherein prohibiting the second memory cells comprises:
prohibiting to read first swap data that have been stored in the second memory cells from the second memory cells; or
prohibiting to write second swap data to be stored in the NAND flash memory cell array to the second memory cells.

6. The memory system (102) of claim 3, wherein the memory controller is further configured to:
i) in response to a write command indicating to write third swap data and the second memory cells being prohibited, write the third swap data to the first memory cells;
and optionally the memory controller is further configured to:
in response to a read command indicating to read the third swap data, read the third swap data from the first memory cells;
and/or
ii) in response to the second memory cells being prohibited, not receive swap data of the RAM transferred from the host to the memory system.

7. The memory system (102) of claim 1, wherein the NAND flash memory cell array is divided into a plurality of memory regions, the first memory cells correspond to a first memory region, the second memory cells correspond to a second memory region, and the memory controller is configured to:
receive a first write command and the user data;
write the user data to the first memory cells corresponding to the first memory region;
receive a second write command, an address signal, and the swap data, the address signal comprising a logical address pointing to the second memory region; and
in response to the second write command, write the swap data to the second memory cells based on the address signal.

8. The memory system (102) of claim 1, wherein each of the first memory cells (704) is configured to store a plurality of bits of data.
and optionally each of the first memory cells (704) is configured to store two bits of data, three bits of data, or four bits of data.

9. A method (800, 900) of operating a memory system (102) coupled to a host (108) and comprising a memory device, the memory device comprising NAND flash memory cell array and peripheral circuits coupled to the NAND flash memory cell array, a memory cell of the NAND flash memory cell array being configured to store one or more bits of data, and the method comprising:
writing user data comprising application generated data or data input by a user via the host (108) to first memory cells (704) of the NAND flash memory cell array;
receiving swap data from a random access memory (RAM) of the host (108) and writing the swap data to second memory cells (706) of the NAND flash memory cell array, wherein each of the second memory cells (706) is configured to store one bit of data; and
reading the swap data from the second memory cells (706) and sending the swap data to the host.

10. The method (800, 900) of claim 9, wherein the RAM comprises ZRAM (504) and the swap data comprises compressed data stored from the ZRAM (504).

11. The method (800, 900) of claim 9, further comprising:
in response to cycle times of the second memory cells being greater than or equal to a threshold, prohibiting the second memory cells.

12. The method (800, 900) of claim 11, wherein:
the cycle times of the second memory cells comprise program/erase cycle times;
the threshold comprises a lifetime threshold; and
the second memory cells are worn out based on the cycle times of the second memory cells being greater than or equal to the lifetime threshold.

13. The method (800, 900) of claim 11, wherein prohibiting the second memory cells comprises:
prohibiting to read first swap data that have been stored in the second memory cells from the second memory cells; or
prohibiting to write second swap data to be stored in the NAND flash memory cell array to the second memory cells.

14. The method (800, 900) of claim 11, further comprising:
i) in response to a write command indicating to write third swap data and the second memory cells being prohibited, writing the third swap data to the first memory cells;
and optionally the method further comprising:
in response to a read command indicating to read the third swap data, reading the third swap data from the first memory cells;
and/or
ii) in response to the second memory cells being prohibited, not receiving swap data of the RAM transferred from the host to the memory system.

15. A system (100), comprising:
a host (108) comprising a host memory (110), and
a memory system (102) of any one of claims 1-8.
